# EUROPÄISCHE PATENTSCHRIFT

(11) **EP 3 627 025 B1**
(45) Veröffentlichungstag und Bekanntmachung des Hinweises auf die Patenterteilung: **27.04.2022**
(21) Anmeldenummer: 19198353.5
(22) Anmeldetag: 19.09.2019
(51) Int. Cl.: F16L 3/10, F16L 3/24, F16B 21/02, H02G 3/30, H02G 3/32, F16L 1/024

(54) **EINLEGEROHRSCHELLE MIT BODENPLATTE**
INSERTABLE TUBE CLAMP WITH FLOOR PLATE
COLLIER DE SERRAGE À INSÉRER POUR TUYAUX POURVU DE PLAQUE DE FOND

(30) Priorität: 20.09.2018 EP 18195607
(43) Veröffentlichungstag der Anmeldung: 25.03.2020
(73) Patentinhaber: Renner AG, 8864 Reichenburg (CH)
(72) Erfinder: GÖKTAS, Dogan, 8864 Reichenburg (CH)
(74) Vertreter: Koelliker, Robert

(56) Entgegenhaltungen:
- EP-A1- 2 910 829
- CH-B1- 700 182
- DE-U1- 9 013 433

## Beschreibung

Die vorliegende Erfindung bezieht sich auf eine Einlegerohrschelle, ein Verfahren zum Verlegen von Rohren mit der Einlegerohrschelle sowie die Verwendung der Einlegerohrschelle.

Beim Verlegen von Rohren werden diese in regelmässigen Abständen fixiert, damit sie nicht plötzlich lose herumliegen oder herunterhängen. Die Fixierung erfolgt oft über sogenannte Einlegerohrschellen, welche einerseits am Untergrund befestigt werden und andererseits eine Vorrichtung aufweisen, an welcher die Rohre angebracht werden.

So beschreibt die EP 2 910 829 A1 ein Rohrschellenelement für eine Rohrhalterung mit Stützen, welche durch das Rohrschellenelement verbindbar sind, wobei das Rohrschellenelement einen Träger aufweist, wobei dieser mit einem Befestigungselement, d.h. einer Klammer, ausgerüstet ist, welches in Längsrichtung L des Trägers verschiebbar ist, dass mindestens eine Zunge des Befestigungselements in einer Anfangsstellung der Verschiebbarkeit des Befestigungsteils die Ausnehmung im Träger im Wesentlichen frei lässt und in einer dazu verschobenen Endstellung die Ausnehmung im Träger mindestens teilweise überdeckt. Dadurch kann eine schnelle Befestigung der Klammern erhalten werden. Die Stützen werden an der Bodenplatte befestigt, indem der Fuss der Stützen zwischen zwei zueinander parallel und linear angeordneten Führungen eingeschoben werden. Zur korrekten Befestigung der Stützen ist oft ein gewisser Kraftaufwand notwendig, wobei der exakte Abstand der beiden Stützen zueinander aufgrund der Art der Befestigung nicht automatisch eingestellt wird. Dadurch muss die Distanz der beiden Stützen zueinander oft mühsam feinjustiert werden. Auch ist eine allfällige Entfernung der Stützen von der Bodenplatte vielfach schwierig zu bewerkstelligen.

Die CH 700 182 B1 beschreibt eine Rohrhalterung mit von einem Grundelement wegragenden Stützen und mindestens einem an beiden Stützen befestigbaren Rohrschellenteil, wobei das Grundelement und die Stützen zusammenwirkende Befestigungsmittel aufweisen, welche eine Montage der Stützen am Grundelement erlauben. Die Rohrhalterung weist in Längsrichtung des Grundelements erstreckende Führungen auf, die zur Aufnahme des jeweiligen Fusses ausgestaltet sind. Der Fuss und das Grundelement können zudem ein Loch aufweisen, durch welches ein Nagel oder eine Schraube vorgetrieben werden kann, um das Grundelement am Untergrund zu fixieren. Nachteilig daran ist, dass die Stützen über den definierten Fixierpunkt hinausgeschoben werden können, wodurch die Rohrhalterung nicht mehr in die Stützen passt. Auch ist oft zur korrekten Befestigung der Stützen ein gewisser Kraftaufwand notwendig, wobei der exakte Abstand der beiden Stützen zueinander aufgrund der Art der Befestigung nicht automatisch eingestellt wird. Dadurch muss die exakte Distanz der beiden Stützen zueinander oft mühsam feinjustiert werden. Auch ist eine allfällige Entfernung der Stützen von der Bodenplatte vielfach schwierig zu bewerkstelligen.

Die Aufgabe der vorliegenden Erfindung ist es daher die Nachteile des Standes der Technik zu beheben. Dabei soll es insbesondere möglich sein, die Stützen auf einfache Art und Weise an der Bodenplatte in für die jeweiligen Rohrschellenbügel korrektem Abstand zu befestigen, ohne dass sie über den definierten Fixpunkt hinausgeschoben werden können. Zudem soll es möglich sein, dass Stützen gegebenenfalls auch einfach und ohne unnötigen Kraftaufwand wieder von der Bodenplatte entfernt werden können.

Die Aufgabe konnte überraschenderweise gelöst werden mit einer Einlegerohrschelle (1) umfassend mindestens einen Rohrschellenbügel (2) mit seitlichen Klammern (3) und Stützen (4) mit einer Vielzahl seitlicher Öffnungen (41), wobei der Rohrschellenbügel (2) einen linken und einen rechten Endbereich (21, 22) mit je einer Öffnung (23) aufweist, die Stützen (4) in die Öffnungen (23) eingeführt werden können und die Klammern (3) so über die Endbereiche (21, 22) geschoben werden können, dass die Klammern (3) in mindestens eine Öffnung (41) der Stütze (4) greifen um den Rohrschellenbügel (2) an der Stütze (4) zu befestigen, wobei die Einlegerohrschelle (1) eine Bodenplatte (5) und die Stützen (4) im unteren Endbereich der Stützen (4) einen dazu im Wesentlichen rechtwinklig angeordneten Fuss (42) aufweist, wobei die Bodenplatte (5) und der Fuss (42) der Stützen (4) zur Befestigung der Stützen (4) an der Bodenplatte (5) zusammen einen Drehverschluss (6) ausbilden, der Drehverschluss (6) mindestens einen gerundeten Führungsbereich (53) umfasst, wobei der Führungsbereich (53) Teil der Bodenplatte (5) ist und der Winkelumfang des oder der Führungsbereiche (53) einen Winkel von 180° nicht übersteigt, sowie der Fuss (42) der Stütze (4) mindestens einen gerundeten Abschnitt (45) umfasst, wobei der gerundete Abschnitt (45) des Fusses (42) in den Führungsbereich (53) der Bodenplatte (5) greift.

Beansprucht wird auch ein Verfahren zum Verlegen von Rohren (7) mit der erfindungsgemässen Einlegerohrschelle (1), wobei
i) die Bodenplatte (5) und der Fuss (42) der Stützen (4) zur Befestigung der Stützen (4) an der Bodenplatte (5) zusammen einen Drehverschluss (6) ausbilden, wobei die Stützen (4) mittels Drehverschluss (6) an der Bodenplatte (5) befestigt werden,
ii) die Klammern (3) in die Endbereiche (21, 22) eines ersten Rohrschellenbügels (2) geschoben werden, wodurch die Klammer (3) am Rohrschellenbügel (2) gehalten wird,
iii) die Stützen (4) durch die Öffnungen (23) des ersten Rohrschellenbügels (2) geführt werden und der Rohrschellenbügel (2) mittels den Klammern (3) an gewünschter Stelle an den Stützen (4) befestigt wird,
iv) ein Rohr (7) auf den Rohrschellenbügel (2) gelegt wird, und
v) gegebenenfalls die Schritte ii) und iii) mit einem zweiten Rohrschellenbügel (2) wiederholt werden, wodurch das Rohr (7) oben und unten mit je einem Rohrschellenbügel (2) gehalten wird.

Auch wird die Verwendung der erfindungsgemässen Einlegerohrschelle (1) beansprucht zum Fixieren von Rohren (7) wie Wasserrohre Lüftungsrohre, Kabelrohre sowie Kabel und/oder Leitungen wie Stromleitungen, Telefonleitungen und/oder TV-Leitungen.

Die erfindungsgemässe Einlegerohrschelle (1), das erfindungsgemässe Verfahren zum Verlegen von Rohren (7) mit der erfindungsgemässen Einlegerohrschelle (1) sowie die erfindungsgemässe Verwendung der Einlegerohrschelle (1) weisen überraschenderweise viele Vorteile auf. So lassen sich die Stützen auf einfache Art und Weise und ohne wesentlichen Kraftaufwand mittels Drehverschluss (6) in vordefinierter, exakter Distanz an der Bodenplatte (5) befestigen, wobei sie nicht über den Drehverschluss (6) hinausgeschoben werden können. Dadurch lassen sich die Stützen (4) auf einfache Art und Weise an der Bodenplatte (5) von Hand schnell und ohne Kraftaufwand reversibel in korrekter Distanz zueinander befestigen, ohne dass Hilfsmittel benötigt werden. Auch können die Rohrschellenbügel (2) einfach in die Stützen (4) eingefügt und - sofern notwendig - einfach und ohne unnötigen Kraftaufwand wieder von der Bodenplatte (5) entfernt werden.

Auch lässt sich die Einlegerohrschelle (1) mit Rohrschellenbügel (2), Klammern (3) sowie die Stützen (4) und die Bodenplatte (5) mit Drehverschluss (6) auf einfache Art und Weise herstellen.

### Die Einleqerohrschelle (1)

Die erfindungsgemässe Einlegerohrschelle (1) umfasst mindestens einen Rohrschellenbügel (2) mit seitlichen Klammern (3) sowie Stützen (4) mit einer Vielzahl seitlicher Öffnungen (41). Dabei weist der Rohrschellenbügel (2) einen linken und einen rechten Endbereich (21, 22) mit je einer Öffnung (23) auf. So können die Stützen (4) in die Öffnungen (23) eingeführt und die Klammern (3) über die Endbereiche (21, 22) geschoben werden, dass die Klammern (3) in mindestens eine Öffnung (41) der Stütze (4) greifen um den Rohrschellenbügel (2) an der Stütze (4) zu befestigen. Dabei umfasst die Einlegerohrschelle (1) eine Bodenplatte (5) und die Stützen (4) weisen im unteren Endbereich der Stützen (4) einen zu den Stützen (4) im Wesentlichen rechtwinklig angeordneten Fuss (42) auf.

Erfindungswesentlich ist dabei, dass die Bodenplatte (5) und der Fuss (42) der Stützen (4) der Einlegerohrschelle (1) zur Befestigung der Stützen (4) an der Bodenplatte (5) zusammen einen Drehverschluss (6) ausbilden, wobei der Drehverschluss (6) mindestens einen gerundeten Führungsbereich (53), wobei der Führungsbereich (53) Teil der Bodenplatte (5) ist und der Winkelumfang des oder der Führungsbereiche (53) einen Winkel von 180° nicht übersteigt. Werden mehrere Führungsbereiche (53) eingesetzt, gilt der genannte Winkel für die Summe der Führungsbereiche (53). Zudem umfasst der Fuss (42) der Stütze (4) mindestens einen gerundeten Abschnitt (45), wobei der gerundete Abschnitt (45) des Fusses (42) in den Führungsbereich (53) der Bodenplatte (5) greift. Dabei kann der Führungsbereich zusammenhängend sein oder in mehrere Fragmente unterteil sein. Diese Anordnung erlaubt ein einfaches Einfügen und gegebenenfalls mittels Drehbewegung das Befestigen der Stütze (4) mit Fuss (42) an der Bodenplatte (5).

Der Führungsbereich (53) kann parallel zur Bodenplatte (5) angeordnet sein, d.h. die Distanz zwischen Führungsbereich (53) und Bodenplatte (5) bleibt im Wesentlichen über den gesamten Führungsbereich (53) konstant. Alternativ kann sich die Distanz zwischen Führungsbereich (53) und Bodenplatte (5) des Führungsbereichs (53) verändern - insbesondere verjüngen, d.h. die Distanz nimmt ab. Dabei sind die Abstände vorteilhafterweise so gewählt, dass der Fuss (42) - wird er in den Führungsbereich (53) eingeführt - sich zunächst gut drehen lässt. Gegen das Ende des Führungsbereichs (53), wo sich der Abstand verringert, klemmt sich der Fuss (42) dann im Führungsbereich (53) ein.

In einer bevorzugten Ausführungsform lässt sich die Stütze (4) im Drehverschluss (6) um mindestens 30°, bevorzugt um mindestens 40°, drehen.

Die Bodenplatte (6) und/oder der Drehverschluss (6), sowie gegebenenfalls der Rohrschellenbügel (2), die Klammern (3) und die Stützen (4), der Einlegerohrschelle (1) basieren typischerweise aus Metall und/oder Kunststoff, insbesondere auf verzinktem Blech, Stahl, Edelstahl, Eisen, Messing, Kupfer, Aluminium und/oder Hartkunststoff. Dabei können die einzelnen Bestandteile alle aus gleichem Material oder aus unterschiedlichen Materialien gefertigt werden.

Die Herstellung der einzelnen Komponenten der Einlegerohrschelle (1) erfolgt mit bekannten Verfahren der Metallverarbeitung, beispielsweise mittels Stanzen und/oder Lasern. Geeignete Verfahren sind dem Fachmann bekannt.

### Die Bodenplatte (5) und Stützen (4) mit Drehverschluss (6)

Die Bodenplatte (5) und die Stützen (4) der erfindungsgemässen Einlegerohrschelle (1) bilden zusammen einen Drehverschluss (6). Dabei weisen die Stützen (4) im unteren Endbereich der Stützen (4) einen im Wesentlichen rechtwinklig angeordneten Fuss (42) auf, welcher - parallel zur Bodenplatte angeordnet - die Stützen (4) mittels Drehverschluss (6) an der Bodenplatte (5) befestigt.

Der Drehverschluss (6) der erfindungsgemässen Einlegerohrschelle (1) ist vorteilhafterweise durch eine Öse mit Kragen (51, 44) und eine Öffnung (43, 52) ausgebildet, wobei die Öse (51, 44) in die Öffnung (43, 52) greift, wobei
i) die Öse (51) Teil der Bodenplatte (5) ist, und die Öffnung (43) eine Öffnung im Fuss (42) der Stütze (4) darstellt, oder
ii) die Öffnung (52) eine Öffnung in der Bodenplatte (5) darstellt, und die Öse (44) eine Öse im Fuss (42) der Stütze (4) darstellt.
Durch diese Anordnung werden die Stützen (4) exakt am dafür vorgesehenen Ort der Bodenplatte (5) platziert, wodurch der Abstand der Stützen zueinander optimal auf den Rohrschellenbügel (2) abgestimmt wird. Zudem erlaubt die Öse mit Kragen (51, 44), welche in die Öffnung (43, 52) greift, ein problemloses Drehen an Ort.

In einer bevorzugten Ausführungsform umfasst der Drehverschluss (6) bevorzugt zwei einander gegenüberliegende Führungsbereiche (53) und der Fuss (42) der Stütze (4) zwei gerundete, einander gegenüberliegende Abschnitte, wobei die gerundeten Abschnitte des Fusses (42) in die Führungsbereiche (53) der Bodenplatte (5) greifen. Dabei übersteigt der Winkelumfang der Führungsbereiche (53) und der gerundeten Abschnitte (45) jeweils einen Winkel von 90° nicht. Dies erlaubt ein einfaches Einfügen des Fusses (42) der Stütze (4) in den Drehverschluss (6) der Bodenplatte (5) mit anschliessendem Befestigen der Stütze an der Bodenplatte (5) mittels einfacher Drehbewegung, bei welcher die gerundeten Abschnitte (45) in die Führungsbereiche (53) eingeschoben werden. Aufgrund der einander gegenüberliegenden Führungsbereiche (53) erhöht sich die Stabilität der Stütze an der Bodenplatte (5).

In einer bevorzugten Ausführungsform wird der Drehverschluss (6)
i) ausgebildet durch eine Öse mit Kragen (51, 44) und eine Öffnung (43, 52), wobei die Öse (51, 44) in die Öffnung (43, 52) greift, und
ii) umfasst zwei einander gegenüberliegende, an der Bodenplatte (5) angebrachte, Führungsbereiche (53) sowie der Fuss (42) der Stütze (4) zwei gerundete, einander gegenüberliegende Abschnitte, wobei die gerundeten Abschnitte des Fusses (42) in die Führungsbereiche (53) der Bodenplatte (5) greifen und der Winkelumfang der Führungsbereiche (53) und der gerundeten Abschnitte (45) jeweils einen Winkel von 90° nicht übersteigt.
Dadurch werden die Vorteile der Öse mit Kragen (51, 44), welche in die Öffnung (43, 52) greift, mit den Vorteilen der Führungsbereiche (53), in welche die Abschnitte des Fusses (42) greifen, kombiniert. Somit kommen die Vorzüge des Drehverschlusses (6), wie einfache Handhabung und problemloses, reversibles Befestigen der Stütze (4) an der Bodenplatte (5) besonders gut Geltung.

Der Fuss (42) der Stützen (4) und die Bodenplatte (5) können zudem mindestens eine weitere Öffnung (46, 55) aufweisen, um die Stütze (4) und die Bodenplatte (5) mittels Nagels oder Schraube am Untergrund - beispielsweise an einer Schalplatte aus Holz - zu befestigen. Dabei sind die Öffnungen (46, 55) typischerweise so angeordnet, dass sie übereinander zu liegen kommen, wenn - sofern vorhanden - die Stütze (4), und somit auch der Fuss (42), im Drehverschluss (6) korrekt gedreht ist und die gerundeten Abschnitte des Fusses (42) in die Führungsbereiche (53) der Bodenplatte greifen.

Die Bodenplatte (5) kann im Bereich des Drehverschlusses (6) und somit des gerundeten Führungsbereichs (53) einen Positionshalter (54) aufweisen, an welchem der untere äussere Bereich (47) der Stütze (4) anschlägt oder einrastet. Dadurch wird die Stütze (4) an der Bodenplatte (5) bei korrekter Drehung fixiert, dass die beiden Stützen (4) der Einlegerohrschelle (1) in optimaler Position zueinanderstehen, wodurch das Einfügen der Stützen (4) in die Öffnungen (23) des oder der Rohrschellenbügel (2) stark erleichtert wird.

### Der Rohrschellenbüqel (2) mit den Fixierelementen A (24, 27) und die Klammer (3) mit den Fixierelementen B (31, 35)

In einer bevorzugten Ausführungsform der erfindungsgemässen Einlegerohrschelle (1) weisen zudem
- die Endbereiche (21, 22) der Rohrschellenbügel (2) mindestens ein Fixierelement A (24, 27) und die Klammern (3) mindestens eine Zunge (34) und mindestens ein Fixierelement B (31, 35) aufweisen, wobei das Fixierelement A (24, 27) und das Fixierelement B (31, 35) ineinandergreifen, wodurch die Klammer (3) am Endbereich (21, 22) des Rohrschellenbügels (2), und somit an der gegenüberliegenden Seite des relativ zum zwischen den Öffnungen (23) befindlichen Mittelteils des Rohrschellenbügels (2), fixiert wird,
- die Klammer (3), wenn sie in mindestens eine Öffnung (41) der Stütze (4) greifen um den Rohrschellenbügel (2) an der Stütze (4) zu befestigen, die Stütze (4) nicht umfasst, und
- die Zunge (34) der Klammer (3), wenn die Klammer an den Endbereichen (21, 22) des Rohrschellenbügels (2) angebracht ist, parallel zu den Endbereichen (21, 22) des Rohrschellenbügels (2) angeordnet ist.

Mit anderen Worten: Mindestens ein Fixierelement A (24) und ein Fixierelement B (31) oder mindestens ein Fixierelement A (27) und ein Fixierelement B (35) greifen ineinander. Dadurch lassen sich die Klammern (3) auf einfache Art und Weise über die Endbereiche (21, 22) der Rohrschellenbügel (2) stossen, wobei die Klammern (3) durch die Fixierelemente A und B reversibel am Rohrschellenbügel (2) befestigt werden. Dies kann beispielsweise werkseitig erfolgen, wodurch auf der Baustelle direkt Rohrschellenbügel (2) mit seitlich angeordneten Klammern (3) einsetzt werden können. Bei der Montage der Einlegerohrschelle können dann die - vorteilhafterweise am Untergrund befestigten - Stützen (4) durch die Öffnungen (23) des Rohrschellenbügels (2) eingeführt und die Klammern (3) in die mindestens eine Öffnung (41) der seitlichen Stütze (4) eingeschoben werden. Bei Bedarf können die Klammern (3) auch problemlos und reversibel aus den Öffnungen (41) der Stützen (4) entfernt werden, wobei die Klammern (3) aufgrund der Fixierelemente A (24, 27) und B (31, 35) im Endbereich (21, 22) des Rohrschellenbügels (2) arretiert werden. Dabei können die Klammern (3) auch ganz vom Rohrschellenbügel (2) entfernt werden.

Durch diese Ausführung lassen sich die Klammern (3) auf einfache Art und Weise über die Endbereiche (21, 22) der Rohrschellenbügel (2) stossen, wobei die Klammern (3) durch die Fixierelemente A und B reversibel am Rohrschellenbügel (2) befestigt werden. Dies kann beispielsweise werkseitig erfolgen, wodurch auf der Baustelle direkt Rohrschellenbügel (2) mit seitlich angeordneten Klammern (3) einsetzt werden können. Bei der Montage der Einlegerohrschelle können dann die - vorteilhafterweise am Untergrund befestigten - Stützen (4) durch die Öffnungen (23) des Rohrschellenbügels (2) eingeführt und die Klammern (3) in die mindestens eine Öffnung (41) der seitlichen Stütze (4) eingeschoben werden. Bei Bedarf können die Klammern (3) der bei der erfindungsgemässen Einlegerohrschelle (1) auch problemlos und reversibel aus den Öffnungen (41) der Stützen (4) entfernt werden, um die Einstellhöhe des Rohrschellenbügels anzupassen, wobei die Klammern (3) aufgrund der Fixierelemente A (24, 27) und B (31, 35) im Endbereich (21, 22) des Rohrschellenbügels (2) arretiert werden. Da die dadurch erhaltene Fixierung jedoch reversibel ist, können die Klammern (3) auch ganz vom Rohrschellenbügel (2) entfernt werden. Dies ist insbesondere dann von grossem Vorteil, wenn eine - beispielsweise defekte - Klammer (3) entfernt werden muss.

In dieser Ausführungsform lassen sich die Klammern (3) einfach werk- und/oder bauseitig über die Endbereiche (21, 22) der Rohrschellenbügel (2) schieben und in den Stützen (4) einrasten. Dies erlaubt bei bauseitiger Montage - und bei entsprechendem Angebot - eine flexible Auswahl der Klammern (3), d.h. die Klammer (3) kann individuell nach den spezifischen Anforderungen und/oder Bedürfnissen ausgewählt werden. Die Klammern (3) können zudem auch ohne grossen Kraftaufwand wieder aus der Stütze (4) gezogen werden, falls die Höhe der Rohrschellenbügel (2) angepasst werden sollte. Nachdem die vertikale Positionierung des Rohrschellenbügels (2) abgeschlossen ist, kann die Klammer (3) beispielsweise mittels Verschluss (25) fixiert werden, sodass die Klammer (3) nicht mehr aus den seitlichen Öffnungen (41) der Stütze (4) springt.

Vorteilhafterweise ist mindestens ein Fixierelement A (24, 27) als Ausbuchtung und mindesten ein Fixierelement B (31, 35) als Öffnung oder Einbuchtung, oder mindestens ein Fixierelement A (24, 27) als Öffnung oder Einbuchtung und mindesten ein Fixierelement B (31, 35) als Ausbuchtung ausgebildet, wodurch die Ausbuchtung eines Fixierelements in die Öffnung oder Einbuchtung des anderen Fixierelements greift. Durch geeignete Ausgestaltung sind die Fixierelemente typischerweise so ausgestaltet, dass die Klammer (3) so am Endbereich (21, 22) befestigt ist, dass sie mit wenig Kraftaufwand verschoben werden kann.

Das Fixierelement A (24) des Rohrschellenbügels (2) stellt vorteilhafterweise eine Ausbuchtung in den Endbereichen (21, 22) und das Fixierelement B (31) der Klammer (3) eine Öffnung oder Einbuchtung dar, wobei das Fixierelement A (24) so ausgebildet ist, dass der höchste Punkt (24a) der Ausbuchtung in Richtung
i) des Endbereich-Endes (21a, 22a) eine negative Steigung von 5° bis 50°, insbesondere von 10° bis 40°, und/oder
ii) der Mitte des Rohrschellenbügels (2) eine negative Steigung von 55° bis 90°, insbesondere von 70° bis 90°, aufweist.
Dabei wird der höchsten Punkt (24a) der Ausbuchtung so ermittelt, dass der Rohrschellenbügel (2) auf einen horizontalen Untergrund gelegt wird, wobei sich die Ausbuchtung auf der zum Untergrund entgegengesetzten Seite des Rohrschellenbügels (2) befindet. Diese Anordnung erlaubt, dass die Klammer (3) ohne grossen Kraftaufwand entlang den Endbereichen (21, 22) und weiter Richtung Stütze (4) gestossen kann, um die Zunge oder Zungen (34) in die Öffnung oder Öffnungen (41) einzuschieben. Dadurch wird der Rohrschellenbügel (2) an der Stütze (4) in gewünschter Position fixiert. Wird nun die Klammer (3) wieder aus der Öffnung (41) zurückgezogen, dient die Ausbuchtung, d.h. das Fixierelement A (24), als Anschlag des Fixierelements B (31) der Klammer (3), wodurch die Klammer (3) unbeabsichtigt nicht oder nur mit sehr grossem Kraftaufwand vom Rohrschellenbügel (2) entfernt werden kann.

Das Fixierelement A (24) stellt zudem bevorzugt eine Ausbuchtung und das Fixierelement B (31) eine längliche Öffnung dar, wodurch, wenn das Fixierelement A (24) und das Fixierelement B (31) ineinander greifen, die Klammer (3) in Längsrichtung des Rohrschellenbügels (2) frei hin und zurück geschoben werden kann, solange die Fixierelemente A, B (24, 31) ineinandergreifen.

Der Rohrschellenbügel (2) kann auch - anstelle oder zusätzlich zum Fixierelement A (24) mindestens ein Fixierelement A (27) in Form einer Ausbuchtung, Öffnung oder Einbuchtung aufweisen. Hilfreicherweise umfasst dann die Klammer (3) mindestens ein Fixierelement B (35) in Form einer Öffnung, Einbuchtung oder Ausbuchtung, wobei das Fixierelement A (27) und das Fixierelement B (35) ineinandergreifen.

Mindestens ein Endbereich-Ende (21a, 22a) des Rohrschellenbügels (2) weist bevorzugt einen bieg- und/oder drehbaren Verschluss (25) und mindestens eine Klammer (3) in der Mitte des Haltebereichs (32) der Klammer (3) eine weitere Öffnung (33) auf, durch welche der Verschluss (25) beim Befestigen der Klammer (3) an der Stütze (4) hindurch führt. Dabei ist der Verschluss (25) vorteilhafterweise am Rohrschellenbügel (2) befestigt oder Teil des Rohrschellenbügels (2). Werden nun Zungen (34) der Klammer (3) in Öffnungen (41) der Stützen (4) geschoben, wird der Verschluss (25) durch die Öffnung (33) der Klammer (3) gestossen. Anschliessend kann der Verschluss (25) gedreht oder abgewinkelt werden, wodurch er die Öffnung (33) verschliesst. Dadurch wird die Klammer (3) am Rohrschellenbügel (2) arretiert.

Der Verschluss (25) weist vorteilhafterweise ein schmales Verbindungsstück zum Endbereich-Ende (21a, 22a) des Rohrschellenbügels (2) auf. Dadurch lässt sich der Verschluss (25) von Hand und/oder mit einem geeigneten Werkzeug ohne grossen Kraftaufwand biegen.

Der Verschluss (25) kann beispielsweise eine T-Form, Ω-Form oder eine einfache Rechteck-Form aufweisen und in der Mitte oder an einer oder beiden Seiten des Endbereich-Endes (21a, 22a) angeordnet sein. Ist der Verschluss (25) an den Seiten der Endbereich-Ende (21a, 22a) angeordnet, stellen die Öffnungen (33) der Klammer (3) vorteilhafterweise seitliche Aussparungen dar, durch welche der Verschluss (25) greifen kann.

In einer bevorzugten Ausführungsform weist mindestens ein Endbereich-Ende (21a, 22a) des Rohrschellenbügels (2) zwei seitliche Führungselemente (26) auf, welche mindestens einen Teil der Klammer (3) seitlich führen. Dadurch wird die Klammer (3) seitlich begrenzt und geführt. Dies verhindert ein seitliches Abrutschen der Klammer (3).

### Das Verfahren

Gemäss dem erfindungsgemässen Verfahren zum Verlegen von Rohren (7) mit der erfindungsgemässen Einlegerohrschelle (1)
i) bilden die Bodenplatte (5) und der Fuss (42) der Stützen (4) zur Befestigung der Stützen (4) an der Bodenplatte (5) zusammen einen Drehverschluss (6) aus, wobei die Stützen (4) mittels Drehverschluss (6) an der Bodenplatte (5) befestigt werden. Somit können die Stützen auf einfache Art und Weise von Hand in vordefiniertem Abstand am zu befestigenden Untergrund fixiert werden;
ii) werden die Klammern (3) in die Endbereiche (21, 22) eines ersten Rohrschellenbügels (2) geschoben, wodurch die Klammern (3) am Rohrschellenbügel (2) gehalten werden. Dabei greifen bevorzugt mindestens ein Fixierelement A (24, 27) des Rohrschellenbügels (2) und mindestens ein Fixierelement B (31, 35) der Klammern (3) ineinander;
iii) werden die Stützen (4) vor oder nach den Schritten i) oder ii) durch die Öffnungen (23) des ersten Rohrschellenbügels (2) geführt. Sind die Klammern (3) an dem Rohrschellenbügel (2) angebracht, wird dieser mittels der Klammern (3) an gewünschter Stelle an den Stützen (4) befestigt, indem die Zungen (34) der Klammern (3) durch die Öffnungen (41) gestossen werden. Wird das Rohr (7) mittels einer Mehrzahl von Einlegerohrschellen (1) am Untergrund fixiert, und ist das Rohr (7) insbesondere ein Abwasserrohr, kann dem Rohr (7) mittels unterschiedlicher Positionshöhen der Rohrschellenbügel (2) an den Stützen (4) von unterschiedlichen Einlegerohrschellen (1) ein Gefälle gegeben werden, sodass das Abwasser problemlos und nur durch Schwerkraft abfliessen kann;
iv) falls die Klammern (3) einen Verschluss (25) aufweisen und ist der Rohrschellenbügel (2) an korrekter Stelle an der Stütze (4) angebracht, kann gegebenenfalls mindestens eine Klammer (3) mittels Biegen und/oder Drehen des Verschlusses (25) fixiert werden. Dies verhindert ein versehentliches Hinausschieben der Zunge (34) - und somit der Klammer (3) - aus den Öffnungen (23) der Stütze (4);
v) anschliessend wird ein oder mehrere Rohre (7) auf den Rohrschellenbügel (2) gelegt und bei Bedarf - beispielsweise mittels Kabelbinder - befestigt. Dabei umfasst der Begriff Rohr (7) erfindungsgemäss Rohre, Leitungen und Kabel, wobei Rohre (7) insbesondere Wasserrohre wie Abwasserrohre, Warm- und Kaltwasserrohre, Lüftungsrohre und/oder Kabelrohre; und Leitungen und/oder Kabel Stromleitungen, Telefonleitungen, Glasfaserleitungen und/oder TV-Leitungen umfassen; wobei
vi) bei Bedarf die Schritte ii) bis iv) mit einem zweiten Rohrschellenbügel (2) wiederholt werden können, wodurch das Rohr (7) oben und unten mit je einem Rohrschellenbügel (2) gehalten wird und auch bei stärkerer Beanspruchung des Rohrs (7) die Position nicht verändert.

Werden die Stützen (4) mittels Drehverschluss (6) an der Bodenplatte (5) befestigt, ist es vorteilhaft, wenn der Drehverschluss (6) eine Öse mit Kragen (51, 44) sowie eine Öffnung (43, 52) und/oder einen gerundeten Führungsbereich (53) der Bodenplatte (5) umfasst. Dabei ist der Drehverschluss (6) bevorzugt
i) durch eine Öse mit Kragen (51, 44) und eine Öffnung (43, 52) ausgebildet, wobei die Öffnung (43, 52) um die Öse (51, 44) gelegt wird, wodurch die Stütze (4) mit dem Fuss (42) um die Bodenplatte (5) gedreht werden kann, oder
ii) der gerundete Abschnitt des Fusses (42) der Stütze (4) wird in den Führungsbereich (53) der Bodenplatte (5) - insbesondere mittels Drehbewegung - geführt, um die Stütze (4) auf einfache Art und Weise reversibel und von Hand an der Bodenplatte (5) zu befestigen, oder
iii) die Öffnung (43, 52) wird so um die Öse (51, 44) gelegt, dass der mindestens eine gerundete Abschnitt des Fusses (42) und der mindestens eine gerundete Führungsbereich (53) der Bodenplatte (5) im Wesentlichen einen Kreis, oder einen Teil oder mehrere Teile davon, bilden, wobei anschliessend der Fuss (42) der Stütze (4) um die Öffnung (52) respektive Öse (51) der Bodenplatte (5) gedreht wird, wodurch der gerundete Abschnitt des Fusses (42) in den Führungsbereich (53) greift und dadurch gehalten wird. Diese Ausführungsform erlaubt eine äusserst einfache und präzise Positionierung der Stütze im Drehverschluss (6) mit anschliessender reversibler Arretierung mittels einfacher Drehbewegung.

Weist die Bodenplatte (5) im Bereich des gerundeten Führungsbereichs (53) einen Positionshalter (54) auf, kann der untere äussere Bereich (47) der Stütze (4) am Positionshalter (54) anschlagen oder einrasten. Dadurch wird die Stütze (4) an der Bodenplatte (5) bei korrekter Drehung fixiert, dass die beiden Stützen (4) der Einlegerohrschelle (1) in optimaler Position zueinanderstehen. Dies erleichtert das Einfügen der Stützen (4) in die Öffnungen (23) des oder der Rohrschellenbügel (2).

### Die Verwendung

Die erfindungsgemässe Einlegerohrschelle (1) wird gemäss vorliegender Erfindung insbesondere zum Fixieren von Rohren (7) verwendet, wobei der Begriff Rohr (7) erfindungsgemäss Rohre, Leitungen und Kabel umfasst. Geeignete Rohre (7) umfassen insbesondere Wasserrohre wie Abwasserrohre, Warm- und Kaltwasserrohre, Lüftungsrohre, Kabelrohre Stromleitungen, Telefonleitungen, Glasfaserleitungen und/oder TV-Leitungen.

Die Verwendung der erfindungsgemässen Einlegerohrschelle (1) erfolgt typischerweise bei Gebäuden und Industrieanlagen, beispielsweise bei Neubauten und/oder Renovationen von Gebäuden, und/oder bei verfahrenstechnischen Anlagen.

Dabei kann die Einlegerohrschelle (1) auf Böden, Wänden, Dielen, Trägern und/oder Gerüsten befestigt werden.

Es werden folgende Bezugszeichen verwendet:
- 1: Einlegerohrschelle
- 2: Rohrschellenbügel
21 linker Endbereich des Rohrschellenbügels (2)
21a linkes Endbereich-Ende
22 rechter Endbereich des Rohrschellenbügels (2)
22a rechtes Endbereich-Ende
23 Öffnung im Endbereich (21, 22) des Rohrschellenbügels (2)
24 Fixierelement A im Endbereich (21, 22) des Rohrschellenbügels (2)
24a höchste Punkt der Ausbuchtung (24)
25 bieg- und/oder drehbarer Verschluss des Rohrschellenbügels (2)
26 zwei seitliche Führungselemente beim Endbereich-Ende (21a, 22a) des Rohrschellenbügels (2)
27 Fixierelement A
- 3: seitliche Klammern
31 Fixierelement B der Klammer (3), in welche die Ausbuchtung (24) greift
32 Haltebereichs der Klammer (3)
33 weitere Öffnung im Haltebereichs (32) der Klammer (3)
34 Zungen der Klammern (3)
35 Fixierelement B
- 4: Stützen 4
41 Vielzahl seitlicher Öffnungen der Stützen (4)
42 rechtwinklig angeordneten Fuss der Stütze (4)
43 Öffnung im Fuss (42) der Stütze (4)
44 Öse mit Kragen im Fuss (42) der Stütze (4)
45 gerundete Abschnitt des Fusses (42)
46 weitere Öffnung
47 unterer äusserer Bereich der Stütze (4)
- 5: Bodenplatte
51 Öse mit Kragen - Teil der Bodenplatte (5)
52 Öffnung in der Bodenplatte (5)
53 gerundeter Führungsbereich
54 Positionshalter
55 weitere Öffnung
- 6: Drehverschluss
- 7: Rohr

Im Folgenden werden nicht-limitierende, bevorzugte Ausführungsformen der erfindungsgemässen Einlegerohrschelle (1) mit Rohrschellenbügel (2), Klammern (3), Stützen (4), Bodenplatte (5) und Drehverschluss (6) anhand der nachfolgenden Zeichnungen beschrieben. Diese sind nicht einschränkend auszulegen und werden als Bestandteil der Beschreibung verstanden:

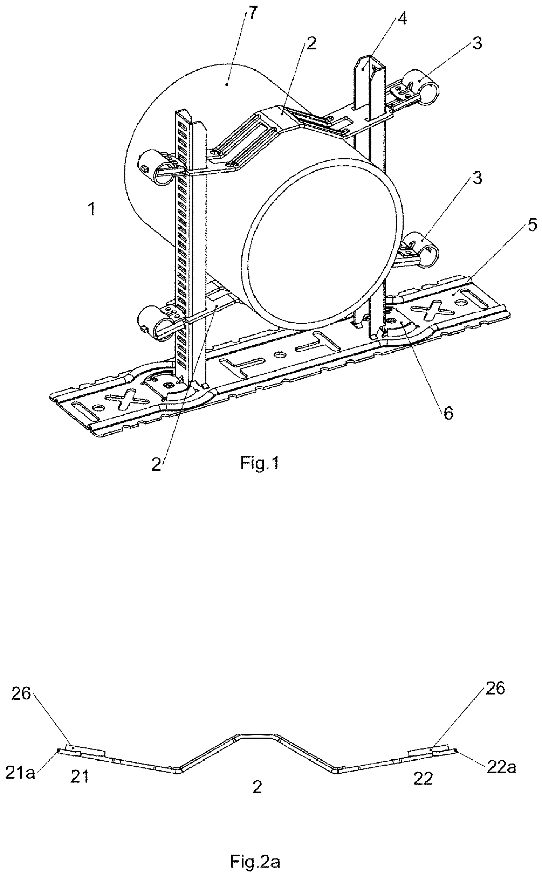

- Fig. 1: zeigt die erfindungsgemässe Einlegerohrschelle (1). An der Bodenplatte (5) wurden mittels Drehverschluss (6) zwei Stützen (4) angebracht, durch welche ein unterer Rohrschellenbügel (2) eingeführt wurde. Dieser wurde seitlich mit je einer Klammer (3) im unteren Bereich der Stützen (4) fixiert und darauf ein Rohr (7) gelegt. Anschliessend wurde ein zweiter Rohrschellenbügel (2) durch die Stützen (4) bis zum Rohr (7) geführt und dort mittels Klammern (3) an den Stützen (4) befestigt. Je nach Rohrgrösse können unterschiedliche die Dimensionen der Einlegerohrschelle (1) und deren Einzelkomponenten verwendet werden.
- Fig. 2a: zeigt ein Rohrschellenbügel (2) mit dem linken Endbereich (21) und dem rechten Endbereich (22). Diese weisen jeweils ein linkes und rechtes Endbereich-Ende (21a, 22a) auf. Der mittlere Teil des Rohrschellenbügels (2) ist erhöht, sodass er einen Teil eines Rohrs (7) optimal umschliessen kann. Die Rohrschellenbügel (2) sind typischerweise so ausgestaltet, dass sie problemlos seitlich gedreht werden können, wodurch der gleiche Rohrschellenbügel (2) als unterer Rohrschellenbügel (2), d.h. unter einem Rohr (7), und als oberer Rohrschellenbügel (2), d.h. über einem Rohr (7), angeordnet werden können. An jedem Endbereich (21, 22) des Rohrschellenbügels (2) sind beispielhaft je zwei seitliche Führungselemente (26) angebracht, damit die Klammern (3), wenn sie über die Endbereiche (21, 22) gestossen werden, nicht seitlich abrutschen.

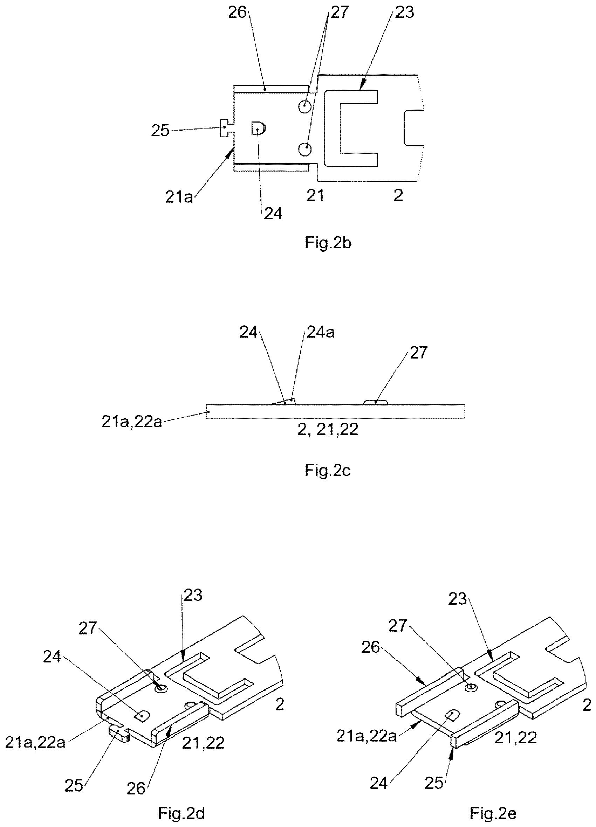

- Fig. 2b: zeigt beispielhaft den linken Endbereich (21) des Rohrschellenbügels (2) mit zwei seitlichen Führungselementen (26) und den Fixierelementen A (24, 27). Am Endbereich-Ende (21a) ist ein drehbarer Verschluss (25) angeordnet, wobei typischerweise die Drehbarkeit durch die Verjüngung des Verschlusses (25), welche am Endbereich-Ende (21a) angebracht ist, zustande kommt. Im Endbereich (21, 22) des Rohrschellenbügels (2) befindet sich die Öffnung (23), welche auf die Grösse und Form der Stützen (4) eingestellt ist, sodass die Stützen (4) problemlos, jedoch nur mit wenig Freiraum, durch die Öffnung (23) geführt werden kann. Analoges gilt für den rechten Endbereich (22), welcher typischerweise symmetrisch zum linken Endbereich (21) ausgestaltet ist.
- Fig. 2c: zeigt beispielhaft einen linken (21) resp. rechten (22) Endbereich des Rohrschellenbügels (2) mit den Fixierelementen A (24, 27), welche beispielhaft in Form einer Ausbuchtung ausgestaltet sind. Wenn nun die Klammer (3) über den Endbereich (21, 22) mit der Ausbuchtung (24) geschoben wird, gelangt die Ausbuchtung (24) in die Öffnung (31). Das Fixierelement A (24) ist nun beispielhaft so ausgebildet, dass der höchste Punkt (24a) der Ausbuchtung in Richtung des Endbereich-Endes (21a, 22a) eine negative Steigung von etwa 20° und in Richtung der Mitte des Rohrschellenbügels (2) eine negative Steigung von etwa 75° aufweist. Dies erlaubt ein einfaches Einfügen der Klammer über die Ausbuchtung (24), verhindert jedoch ein unbeabsichtigtes Entfernen der Klammer (3) vom Endbereich (21, 22). Das oder die Fixierelemente A (27) - beispielsweise in runder oder ovaler Form - dient zum Einrasten in die Öffnungen (35) der Klammer (3), wenn die Zungen (34) der Klammer (3) in die Öffnungen (41) der Stützen (4) eingeschoben sind.
- Fig. 2d: zeigt analog Fig. 2b beispielhaft einen linken (21) resp. rechten (22) Endbereich des Rohrschellenbügels (2) mit seitlichen Führungselementen (26), den Fixierelementen A (24, 27) und der Öffnung (23). Beim Endbereich-Ende (21a, 22a) des Rohrschellenbügels (2) ist der T-förmige Verschluss (25) angeordnet, welcher zur Fixierung der Klammer (3) am Rohrschellenbügel (2) durch die Öffnung (33) der Klammer (3) geführt und anschliessend gedreht werden kann.
- Fig. 2e: zeigt analog Fig. 2d einen linken (21) resp. rechten (22) Endbereich des Rohrschellenbügels (2) mit seitlichen Führungselementen (26). Der Verschluss (25) ist beispielhaft nicht in der Mitte des EndbereichEndes (21a, 22a) angeordnet, sondern als Verlängerung der seitlichen Führungselemente (26). Weist nun die Klammer (3) zwei seitliche Öffnungen (33) resp. Aussparungen auf (nicht dargestellt), oder ist sie schmal genug, kann der beidseitige Verschluss (25) seitlich über den Haltebereich (32) der Klammer (3) gebogen werden, um die Klammer (3) am Rohrschellenbügel (2) zu fixieren.

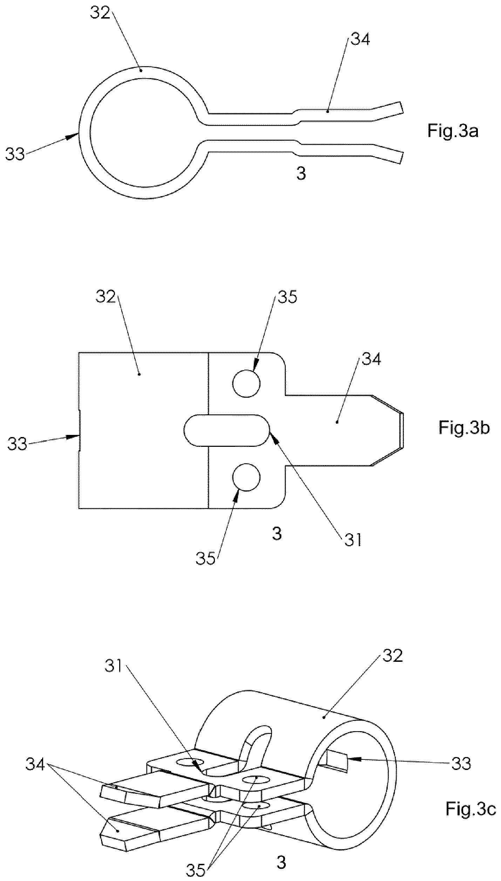

- Fig. 3a: zeigt beispielhaft die seitliche Ansicht einer Klammer (3) mit dem Haltebereich (32) und einer darin angebrachten Öffnung (33) zur Aufnahme eines Verschlusses (25). Die Klammer (3) weist zudem zwei Zungen (34) auf, welche in die Öffnungen (41) geführt werden können, um den Rohrschellenbügel (2) an den Stützen zu fixieren.
- Fig. 3b: und Fig. 3c zeigen beispielhaft die Aufsicht (Fig. 3b) und eine 3-D Darstellung (Fig. 3c) die Klammer (3) mit dem Haltebereich (32), der Öffnung (33), den Zungen (34) sowie einer länglichen Öffnung als Fixierelement B (31) zur Aufnahme des Fixierelements A (24) in Form einer Ausbuchtung. Die längliche Form des Fixierelements B (31) erlaubt das problemlose Hin- und Herbewegen der Klammer (3) in Längsrichtung des Rohrschellenbügels (2). Zudem weist die Klammer (3) zwei Fixierelemente B (35) in Form von runden Öffnungen oder Einbuchtungen aus zur Aufnahme der Fixierelemente A (27) in Form einer Ausbuchtung.

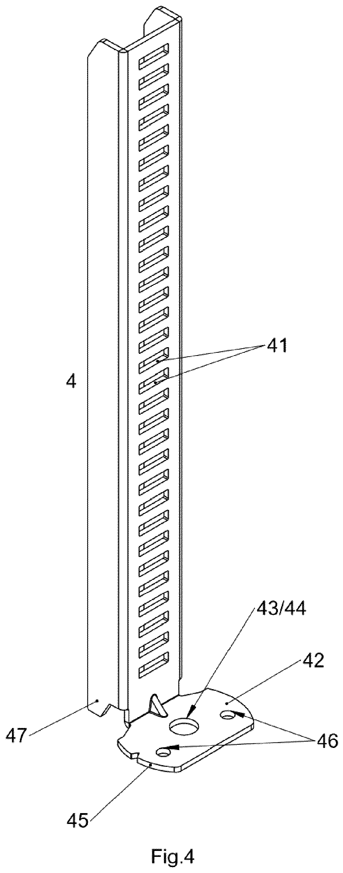

- Fig. 4: zeigt beispielhaft eine Stütze (4) mit einer Vielzahl an Öffnungen (41) und einem zum Längsteil der Stütze (4) mit den Öffnungen (41) rechtwinklig angeordneten Fuss (42). Dieser umfasst eine Öffnung (43), welche gegebenenfalls durch eine Öse mit Kragen (44) (nicht dargestellt) erweitert werden kann, zwei einander gegenüberliegende, gerundete Abschnitte (45), welche im Drehverschluss (6) durch Drehbewegung in die gerundeten Führungsbereiche (53) gedreht werden können. Zudem weist der Fuss (42) zwei weitere Öffnungen (46) auf, durch welche - wenn die Stütze (4) in die korrekte Position und über der weiteren Öffnung (55) der Bodenplatte (5) gedreht ist - die Stütze (4) mit der Bodenplatte (5) mittels Nägel oder Schrauben am Untergrund fixiert werden kann. Zudem ist am unteren, vertikalen Bereich der Stütze (4) der untere äussere Bereich (47) der Stütze (4) angeordnet, welcher - sofern vorhanden - am Positionshalter (54) der Bodenplatte (5) anschlägt oder einrastet.

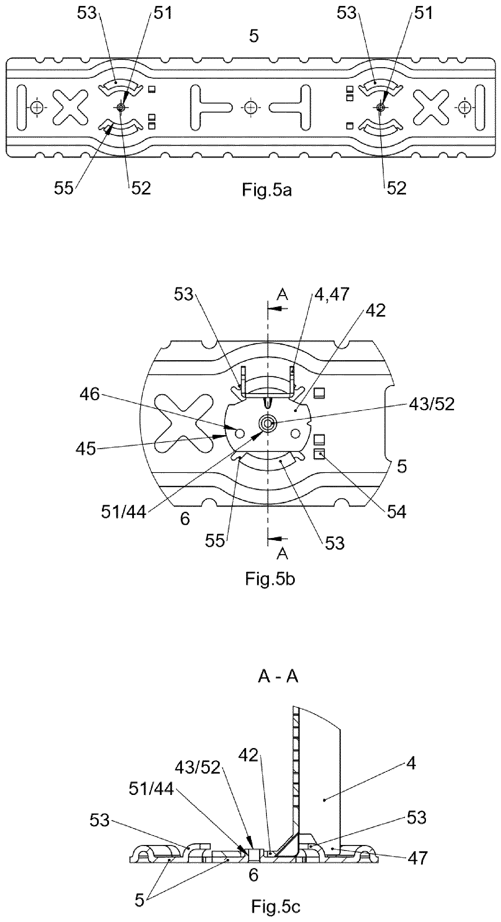

- Fig. 5a: zeigt eine beispielhafte Ausführungsform der Bodenplatte (5) mit den Öffnungen (52), welche mit Ösen mit Kragen (51) ausgebildet sind, sowie je zwei gegenüberliegende Führungsbereiche (53) mit weiteren Öffnungen (55), welche sich nebenan befinden. Zusammen bilden sie den Teil des Drehverschlusses (6), welcher an der Bodenplatte (5) angeordnet ist.
- Fig. 5b: zeigt den Drehverschluss (6) umfassend den oben unter Fig. 5a beschriebenen Teil der Bodenplatte (5), und den Fuss (42) der Stütze (4). Dabei ist die Öffnung (43) des Fusses (42) über die Öse mit Kragen (51) der Bodenplatte gelegt, was ein optimales Drehen ohne Positionsveränderung ermöglicht. Durch Drehen der Stütze (4) mit Fuss (42) werden die gerundeten Abschnitte (45) des Fusses (42) in die gerundeten Führungsbereiche (53) der Bodenplatte (5) eingefügt, sodass die Stützen (4) an der Bodenplatte (5) reversibel befestigt ist. Wird nun die Stütze (4) mit Fuss (42) in Richtung Uhrzeigersinn um 90° gedreht, rastet der untere äussere Bereich (47) der Stütze (4) in dem - beispielhaft dargestellten - Positionshalter (54) ein, wodurch sich die Stütze (4) ohne etwas grösseren und bewusst aufgewendeten Kraftaufwand nicht mehr drehen lässt.
Wenn die Stütze (4) korrekt positioniert ist, kann sie zusammen mit der Bodenplatte (5) am Boden fixiert werden, indem beispielsweise Nägel und/oder Schrauben durch die weiteren Öffnungen (46, 55) am Untergrund angebracht werden.
- Fig. 5c: zeigt den in Fig. 5b angedeuteten Schnitt A-A durch den Drehverschluss (6) umfassend die Stütze (4) mit Fuss (42) und Öffnung (43), wobei die Öffnung (43) über die Öse mit Kragen (51) der Bodenplatte (5) gelegt ist. Es ist auch möglich, dass der Fuss (42) eine Öse mit Kragen (44) und die Bodenplatte (5) lediglich eine Öffnung (52) ohne Öse mit Kragen aufweist. Zudem sind gegenüberliegende gerundete Führungsbereiche (53) angeordnet, in welche die gerundeten Abschnitte (45) des Fusses (42) nach einer - beispielsweise 90°-Drehung - greifen.

## Patentansprüche

1. Einlegerohrschelle (1) umfassend mindestens einen Rohrschellenbügel (2) mit seitlichen Klammern (3) und Stützen (4) mit einer Vielzahl seitlicher Öffnungen (41), wobei der Rohrschellenbügel (2) einen linken und einen rechten Endbereich (21, 22) mit je einer Öffnung (23) aufweist, die Stützen (4) in die Öffnungen (23) der Endbereiche (21, 22) eingeführt werden können und die Klammern (3) so über die Endbereiche (21, 22) geschoben werden können, dass die Klammern (3) in mindestens eine Öffnung (41) der Stütze (4) greifen um den Rohrschellenbügel (2) an der Stütze (4) zu befestigen, wobei die Einlegerohrschelle (1) eine Bodenplatte (5) aufweist und die Stützen (4) im unteren Endbereich der Stützen (4) einen dazu im Wesentlichen rechtwinklig angeordneten Fuss (42) aufweisen, **dadurch gekennzeichnet, dass**
die Bodenplatte (5) und der Fuss (42) der Stützen (4) zur Befestigung der Stützen (4) an der Bodenplatte (5) zusammen einen Drehverschluss (6) ausbilden, der Drehverschluss (6) mindestens einen gerundeten Führungsbereich (53) umfasst, wobei der Führungsbereich (53) Teil der Bodenplatte (5) ist und der Winkelumfang des oder der Führungsbereiche (53) einen Winkel von 180° nicht übersteigt, sowie der Fuss (42) der Stütze (4) mindestens einen gerundeten Abschnitt (45) umfasst, wobei der gerundete Abschnitt (45) des Fusses (42) in den Führungsbereich (53) der Bodenplatte (5) greift.

2. Einlegerohrschelle (1) nach Anspruch 1, **dadurch gekennzeichnet, dass** sich die Stütze (4) im Drehverschluss (6) um mindestens 30°, bevorzugt um mindestens 40°, drehen lässt.

3. Einlegerohrschelle (1) nach Anspruch 1 oder 2, **dadurch gekennzeichnet, dass** der Drehverschluss (6) durch eine Öse mit Kragen (51, 44) und eine Öffnung (43, 52) ausgebildet ist und die Öse (51, 44) in die Öffnung (43, 52) greift, wobei
i) die Öse (51) Teil der Bodenplatte (5) ist, und die Öffnung (43) eine Öffnung im Fuss (42) der Stütze (4) darstellt, oder
ii) die Öffnung (52) eine Öffnung in der Bodenplatte (5) darstellt, und die Öse (44) eine Öse im Fuss (42) der Stütze (4) darstellt.

4. Einlegerohrschelle (1) nach mindestens einem der Ansprüche 1 bis 3, **dadurch gekennzeichnet, dass** der Drehverschluss (6) zwei einander gegenüberliegende Führungsbereiche (53) umfasst und der Fuss (42) der Stütze (4) zwei gerundete, einander gegenüberliegende Abschnitte umfasst, wobei die gerundeten Abschnitte des Fusses (42) in die Führungsbereiche (53) der Bodenplatte (5) greifen und der Winkelumfang der Führungsbereiche (53) und der gerundeten Abschnitte (45) jeweils einen Winkel von 90° nicht übersteigt.

5. Einlegerohrschelle (1) nach mindestens einem der Ansprüche 1 bis 4, **dadurch gekennzeichnet, dass** der Drehverschluss (6)
i) durch eine Öse mit Kragen (51, 44) und eine Öffnung (43, 52) ausgebildet ist, wobei die Öse (51, 44) in die Öffnung (43, 52) greift, und
ii) zwei einander gegenüberliegende, an der Bodenplatte (5) angebrachte, Führungsbereiche (53) sowie der Fuss (42) der Stütze (4) zwei gerundete, einander gegenüberliegende Abschnitte umfasst, wobei die gerundeten Abschnitte des Fusses (42) in die Führungsbereiche (53) der Bodenplatte (5) greifen und der Winkelumfang der Führungsbereiche (53) und die gerundeten Abschnitte (45) jeweils einen Winkel von 90° nicht übersteigt.

6. Einlegerohrschelle (1) nach mindestens einem der Ansprüche 1 bis 5, **dadurch gekennzeichnet, dass** die Bodenplatte (5), der Drehverschluss (6), sowie gegebenenfalls der Rohrschellenbügel (2), die Klammern (3) und die Stützen (4) der Einlegerohrschelle (1) auf verzinktem Blech, Stahl, Edelstahl, Eisen, Messing, Kupfer, Aluminium und/oder Hartkunststoff basieren.

7. Einlegerohrschelle (1) nach mindestens einem der Ansprüche 1 bis 6, **dadurch gekennzeichnet, dass** der Fuss (42) der Stützen (4) und die Bodenplatte (5) mindestens eine weitere Öffnung (46, 55) aufweist, um die Stütze (4) und die Bodenplatte (5) mittels Nagel oder Schraube am Untergrund zu befestigen.

8. Einlegerohrschelle (1) nach mindestens einem der Ansprüche 1 bis 7, **dadurch gekennzeichnet, dass** die Bodenplatte (5) im Bereich des gerundeten Führungsbereichs (53) einen Positionshalter (54) aufweist, an welchem der untere äussere Bereich (47) der Stütze (4) anschlägt oder einrastet.

9. Einlegerohrschelle (1) nach mindestens einem der Ansprüche 1 bis 8, **dadurch gekennzeichnet, dass**
- die Endbereiche (21, 22) der Rohrschellenbügel (2) mindestens ein Fixierelement A (24, 27) und die Klammern (3) mindestens eine Zunge (34) und mindestens ein Fixierelement B (31, 35) aufweisen, wobei das Fixierelement A (24, 27) und das Fixierelement B (31, 35) ineinandergreifen, wodurch die Klammer (3) am Endbereich (21, 22) des Rohrschellenbügels (2), und somit an der gegenüberliegenden Seite des relativ zum zwischen den Öffnungen (23) befindlichen Mittelteils des Rohrschellenbügels (2), fixiert wird,
- die Klammer (3), wenn sie in mindestens eine Öffnung (41) der Stütze (4) greifen um den Rohrschellenbügel (2) an der Stütze (4) zu befestigen, die Stütze (4) nicht umfasst, und
- die Zunge (34) der Klammer (3), wenn die Klammer an den Endbereichen (21, 22) des Rohrschellenbügels (2) angebracht ist, parallel zu den Endbereichen (21, 22) des Rohrschellenbügels (2) angeordnet ist.

10. Einlegerohrschelle (1) nach Anspruch 9, **dadurch gekennzeichnet, dass** das Fixierelement A (24) eine Ausbuchtung in den Endbereichen (21, 22) und das Fixierelement B (31) eine Öffnung oder Einbuchtung darstellt, wobei das Fixierelement A (24) so ausgebildet ist, dass der höchste Punkt (24a) der Ausbuchtung in Richtung
i) des Endbereich-Endes (21a, 22a) eine negative Steigung von 5° bis 50°, insbesondere von 10° bis 40°, und/oder
ii) der Mitte des Rohrschellenbügels (2) eine negative Steigung von 55° bis 90°, insbesondere von 70° bis 90°, aufweist.

11. Einlegerohrschelle (1) nach Anspruch 9 oder 10, **dadurch gekennzeichnet, dass** mindestens ein Endbereich-Ende (21a, 22a) des Rohrschellenbügels (2) einen bieg- und/oder drehbaren Verschluss (25) und mindestens eine Klammer (3) in der Mitte des Haltebereichs (32) der Klammer (3) eine weitere Öffnung (33) aufweist, durch welche der Verschluss (25) beim Befestigen der Klammer (3) an der Stütze (4) hindurch führt.

12. Einlegerohrschelle (1) nach mindestens einem der Ansprüche 9 bis 11, **dadurch gekennzeichnet, dass** mindestens ein Endbereich-Ende (21a, 22a) des Rohrschellenbügels (2) zwei seitliche Führungselemente (26) aufweist, welche mindestens einen Teil der Klammer (3) seitlich führen.

13. Verfahren zum Verlegen von Rohren (7) mit der Einlegerohrschelle (1) nach mindestens einem der Ansprüche 1 bis 12, **dadurch gekennzeichnet, dass**
i) die Stützen (4) mittels Drehverschluss (6) an der Bodenplatte (5) befestigt werden,
ii) die Klammern (3) in die Endbereiche (21, 22) eines ersten Rohrschellenbügels (2) geschoben werden, wodurch die Klammern (3) am Rohrschellenbügel (2) gehalten werden,
iii) die Stützen (4) durch die Öffnungen (23) des ersten Rohrschellenbügels (2) geführt werden und der Rohrschellenbügel (2) mittels den Klammern (3) an gewünschter Stelle an den Stützen (4) befestigt wird,
iv) ein Rohr (7) auf den Rohrschellenbügel (2) gelegt wird, und
v) gegebenenfalls die Schritte ii) und iii) mit einem zweiten Rohrschellenbügel (2) wiederholt werden, wodurch das Rohr (7) oben und unten mit je einem Rohrschellenbügel (2) gehalten wird.

14. Verfahren nach Anspruch 13, **dadurch gekennzeichnet, dass** der Drehverschluss (6) eine Öse mit Kragen (51, 44) sowie eine Öffnung (43, 52) und/oder einen gerundeten Führungsbereich (53) der Bodenplatte (5) umfasst, wobei der Drehverschluss (6) bevorzugt
i) durch eine Öse mit Kragen (51, 44) und eine Öffnung (43, 52) ausgebildet ist, wobei die Öffnung (43, 52) um die Öse (51, 44) gelegt wird, wodurch die Stütze (4) mit dem Fuss (42) um die Bodenplatte (5) gedreht werden kann, oder
ii) der gerundete Abschnitt des Fusses (42) der Stütze (4) in den Führungsbereich (53) der Bodenplatte (5) geführt wird, insbesondere mittels Drehbewegung, oder
iii) die Öffnung (43, 52) so um die Öse (51, 44) gelegt wird, dass der mindestens eine gerundete Abschnitt des Fusses (42) und der mindestens eine gerundete Führungsbereich (53) der Bodenplatte (5) im Wesentlichen einen Kreis, oder einen Teil oder mehrere Teile davon, bilden, wobei anschliessend der Fuss (42) der Stütze (4) um die Öffnung (52) respektive Öse (51) der Bodenplatte (5) gedreht wird, wodurch der gerundete Abschnitt des Fusses (42) in den Führungsbereich (53) greift und dadurch gehalten wird.

15. Verwendung der Einlegerohrschelle (1) nach mindestens einem der Ansprüche 1 bis 12 zum Fixieren von Rohren (7) wie Wasserrohre, Lüftungsrohre, Kabelrohre sowie Kabel und/oder Leitungen wie Stromleitungen, Telefonleitungen und/oder TV-Leitungen.

## Claims

1. Insertion pipe clamp (1) comprising at least one pipe clamp bracket (2) with lateral clasps (3) and supports (4) with a plurality of lateral openings (41), wherein the pipe clamp bracket (2) comprises a left and a right end region (21, 22) with one opening each (23), the supports (4) can be inserted into the openings (23) of the end regions (21, 22) and the clasps (3) can be slid over the end regions (21, 22) in such a way that the clasps (3) engage into at least one opening (41) of the support (4) in order to attach the pipe clamp (2) to the support (4), wherein the insertion pipe clamp (1) comprises a base plate (5) and the supports (4) comprise a foot (42) arranged essentially at a right angle in the lower end region of the supports (4), **characterized in that**
the base plate (5) and the foot (42) of the supports (4) for fastening the supports (4) to the base plate (5) together form a screw cap (6), the screw cap (6) comprises at least one rounded guide area (53), wherein the guide area (53) is part of the base plate (5) and the angular circumference of the guide area(s) (53) does not exceed a 180° angle, and the foot (42) of the support (4) comprises at least one rounded section (45), wherein the rounded section (45) of the foot (42) engages into the guide area (53) of the base plate (5).

2. Insertion pipe clamp (1) according to Claim 1, **characterized in that** the support (4) within the screw cap (6) can be rotated by at least 30°, preferably by at least 40°.

3. Insertion pipe clamp (1) according to Claim 1 or 2, **characterized in that** the screw cap (6) is formed by an eyelet with a collar (51, 44) and an opening (43, 52) and the eyelet (51, 44) engages into the opening (43, 52), wherein
i) the eyelet (51) is part of the base plate (5), and the opening (43) is an opening in the foot (42) of the support (4), or
ii) the opening (52) is an opening in the base plate (5), and the eyelet (44) is an eyelet in the foot (42) of the support (4).

4. Insertion pipe clamp (1) according to at least one of the Claims 1 to 3, **characterized in that** the screw cap (6) comprises two opposing guide areas (53) and the foot (42) of the support (4) comprises two rounded, opposite sections, wherein the rounded sections of the foot (42) engage into the guide areas (53) of the base plate (5) and the angular circumference of the guide areas (53) and of the rounded sections (45) each do not exceed a 90° angle.

5. Insertion pipe clamp (1) according to at least one of the Claims 1 to 4, **characterized in that** the screw cap (6)
i) is formed by an eyelet with a collar (51, 44) and an opening (43, 52), wherein the eyelet (51, 44) engages into the opening (43, 52), and
ii) two opposing guide areas (53) attached to the base plate (5) and the foot (42) of the support (4) comprise two rounded, opposite sections, wherein the rounded sections of the foot (42) engage into the guide areas (53) of the base plate (5) and the angular circumference of the guide areas (53) and of the rounded sections (45) do not exceed a 90° angle respectively.

6. Insertion pipe clamp (1) according to at least one of the Claims 1 to 5, **characterized in that** the base plate (5), the screw cap (6), and, where applicable, the pipe clamp bracket (2), the clasps (3) and the supports (4) of the insertion pipe clamp (1) are based on galvanized sheet, steel, stainless steel, iron, brass, copper, aluminium and/or hard plastic.

7. Insertion pipe clamp (1) according to at least one of the Claims 1 to 6, **characterized in that** the foot (42) of the supports (4) and the base plate (5) comprises at least one further opening (46, 55) to attach the support (4) and the base plate (5) to the ground by means of a nail or a screw.

8. Insertion pipe clamp (1) according to at least one of the Claims 1 to 7, **characterized in that** the base plate (5) in the area of the rounded guide area (53) comprises a position retainer (54), at which the lower outer area (47) of the support (4) strikes or snaps into place.

9. Insertion pipe clamp (1) according to at least one of the Claims 1 to 8, **characterized in that**
- the end regions (21, 22) of the pipe clamp brackets (2) comprise at least one fixing element A (24, 27) and the clasps (3) comprise at least one tongue (34) and at least one fixing element B (31, 35), wherein fixing element A (24, 27) and fixing element B (31, 35) interlock, whereby the clasp (3) is fixed at the end region (21, 22) of the pipe clamp bracket (2), and therefore on the opposite side of the middle part of the pipe clamp bracket (2) located between the openings (23),
- the clasps (3) do not embrace the support (4) if they engage into at least one opening (41) of the support (4) in order to attach the pipe clamp bracket (2) to the support (4), and
- the tongue (34) of the clamp (3), if the clamp is attached to the end regions (21, 22) of the pipe clamp bracket (2), is arranged parallel to the end regions (21, 22) of the pipe clamp bracket (2).

10. Insertion pipe clamp (1) according to Claim 9, **characterized in that** the fixing element A (24) is an indentation in the end regions (21, 22), and the fixing element B (31) is an opening or indentation, wherein the fixing element A (24) is designed in such a way that the highest point (24a) of the insertion pipe clamp in the direction
i) of the end-region end (21a, 22a) has a negative gradient of 5° to 50°, in particular, from 10° to 40°, and/or
ii) the centre of the pipe clamp bracket (2) has a negative gradient of 55° to 90°, in particular, from 70° to 90°.

11. Insertion pipe clamp (1) according to Claim 9 or 10, **characterized in that** at least one end-region end (21a, 22a) of the pipe clamp bracket (2) comprises a bendable and/or rotatable closure (25) and at least one clasp (3) in the middle of the holding region (32) of the clasp (3) has a further opening (33), through which the closure (25) passes when attaching the clasp (3) to the support (4).

12. Insertion pipe clamp bracket (1) according to at least one of the Claims 9 to 11, **characterized in that** at least one end-region end (21a, 22a) of the pipe clamp bracket (2) comprises two lateral guide elements (26), which guide at least one part of the clamp (3) laterally.

13. A method for laying pipes (7) with the insertion pipe clamp (1) according to at least one of the Claims 1 to 12, **characterized in that**
i) the supports (4) are attached to the base plate (5) by means of a screw cap (6),
ii) the clasps (3) are slid into the end regions (21, 22) of a first pipe clamp bracket (2), whereby the clasps (3) are held on the pipe clamp bracket (2),
iii) the supports (4) are guided through the openings (23) of the first pipe clamp bracket (2), and the pipe clamp bracket (2) is fastened to the supports (4) by means of the clasps (3) at the desired point,
iv) a pipe (7) is placed on the pipe clamp bracket (2), and
v) where applicable, steps ii) and iii) are repeated using a second pipe clamp bracket (2), thereby holding the pipe (7) at the top and bottom using one pipe clamp bracket (2) for each.

14. The method according to Claim 13, **characterized in that** the screw cap (6) comprises an eyelet with a collar (51, 44) and an opening (43, 52) and/or a rounded guide area (53) of the base plate (5), wherein the screw cap (6) preferably
i) is formed by an eyelet with collar (51, 44) and an opening (43, 52), wherein the opening (43, 52) is placed around the eyelet (51, 44), whereby the support (4) can be rotated with the foot (42) around the base plate (5), or
ii) the rounded section of the foot (42) of the support (4) is guided into the guide area (53) of the base plate (5), in particular, by means of rotational movement, or
iii) the opening (43, 52) is placed around the eyelet (51, 44) in such a way that the at least one rounded section of the foot (42) and the at least one rounded guide area (53) of the base plate (5) essentially form a circle, or a part or a plurality of parts thereof, wherein the foot (42) of the support (4) is then rotated around the opening (52) or eyelet (51) of the base plate (5), whereby the rounded section of the foot (42) engages into the guide area (53) and is thereby held.

15. Use of the insertion pipe clamp (1) according to at least one of the Claims 1 to 12 for fixing pipes (7), such as water pipes, ventilation pipes, cable ducts and cables and/or lines such as power lines, telephone lines and/or TV lines.

## Revendications

1. Collier de serrage (1) pour tuyau comprenant au moins un étrier de collier de serrage (2) doté d'attaches (3) et de supports (4) latéraux, avec une pluralité d'orifices (41) latéraux, l'étrier de collier de serrage (2) comportant une zone d'extrémité (21, 22) gauche et droite, dotées chacune d'un orifice (23), les supports (4) pouvant s'introduire dans les orifices (23) des zones d'extrémité (21, 22) et les attaches (3) pouvant être emboîtées par-dessus les zones d'extrémité (21, 22), de telle sorte que les attaches (3) s'engagent dans au moins un orifice (41) du support (4), pour fixer l'étrier de collier de serrage (2) sur le support (4), le collier de serrage (1) pour tuyau comportant une plaque d'embase (5) et les supports (4) comportant dans la zone d'extrémité inférieure des supports (4) un pied (42) placé sensiblement à angle droit par rapport à celle-ci, **caractérisé en ce que**
la plaque d'embase (5) et le pied (42) des supports (4) forment conjointement une fermeture rotative (6), pour la fixation des supports (4) sur la plaque d'embase (5), la fermeture rotative (6) comprend au moins une zone de guidage (53) arrondie, la zone de guidage (53) étant une partie de la plaque d'embase (5) et la circonférence angulaire de la ou des zones de guidage (53) n'excédant pas un angle de 180°, et le pied (42) du support (4) comprenant au moins un segment (45) arrondi, le segment (45) arrondi du pied (42) s'engageant dans la zone de guidage (53) de la plaque d'embase (5).

2. Collier de serrage (1) pour tuyau selon la revendication 1, **caractérisé en ce que** le support (4) peut se tourner d'au moins 30°, de préférence d'au moins 40° dans la fermeture rotative (6).

3. Collier de serrage (1) pour tuyau selon la revendication 1 ou 2, **caractérisé en ce que** la fermeture rotative (6) est réalisée par au moins un œillet avec collerette (51, 44) et un orifice (43, 52) et l'œillet (51, 44) s'engage dans l'orifice (43, 52),
i) l'œillet (51) étant une partie de la plaque d'embase (5) et l'orifice (43) constituant un orifice dans le pied (42) du support (4), ou
ii) l'orifice (52) constituant un orifice dans la plaque d'embase (5) et l'œillet (44) constituant un œillet dans le pied (42) du support (4).

4. Collier de serrage (1) pour tuyau selon au moins l'une quelconque des revendications 1 à 3, **caractérisé en ce que** la fermeture rotative (6) comprend deux zones de guidage (53) mutuellement opposées et le pied (42) du support (4) comprend deux segments arrondis, mutuellement opposés, les segments arrondis du pied (42) s'engageant dans les zones de guidage (53) de la plaque d'embase (5) et la circonférence angulaire des zones de guidage (53) et des segments (45) arrondis n'excédant respectivement pas un angle de 90°.

5. Collier de serrage (1) pour tuyau selon au moins l'une quelconque des revendications 1 à 4, **caractérisé en ce que** la fermeture rotative (6)
i) est réalisée par un œillet avec collerette (51, 44) et un orifice (43, 52), l'œillet (51, 44) s'engageant dans l'orifice (43, 52), et
ii) comprend deux zones de guidage (53) mutuellement opposées, montées sur la plaque d'embase (5), et le pied (42) du support (4) comprend deux segments arrondis, mutuellement opposés, les segments arrondis du pied (42) s'engageant dans les zones de guidage (53) de la plaque d'embase (5) et la circonférence angulaire des zones de guidage (53) et les segments (45) arrondis n'excédant respectivement pas un angle de 90°.

6. Collier de serrage (1) pour tuyau selon au moins l'une quelconque des revendications 1 à 5, **caractérisé en ce que** la plaque d'embase (5), la fermeture rotative (6), ainsi qu'éventuellement l'étrier de collier de serrage (2), les attaches (3) et les supports (4) du collier de serrage (1) pour tuyau sont à base de tôle galvanisée, d'acier, d'acier inoxydable, de fer, de laiton, de cuivre, d'aluminium et/ou de matière plastique dure.

7. Collier de serrage (1) pour tuyau selon au moins l'une quelconque des revendications 1 à 6, **caractérisé en ce que** le pied (42) des supports (4) et la plaque d'embase (5) comportent au moins un orifice (46, 55) supplémentaire, pour fixer le support (4) et la plaque d'embase (5) par clou ou vis sur la surface de base.

8. Collier de serrage (1) pour tuyau selon au moins l'une quelconque des revendications 1 à 7, **caractérisé en ce que** dans la région de la zone de guidage (53) arrondie, la plaque d'embase (5) comporte une butée de position (54) sur laquelle la région (47) extérieure inférieure du support (4) bute ou s'enclenche.

9. Collier de serrage (1) pour tuyau selon au moins l'une quelconque des revendications 1 à 8, **caractérisé en ce que**
- les zones d'extrémité (21, 22) de l'étrier de collier de serrage (2) comportent au moins un élément de fixation A (24, 27) et les attaches (3) comportent au moins une languette (34) et au moins un élément de fixation B (31, 35), l'élément de fixation A (24, 27) et l'élément de fixation B (31, 35) s'engageant l'un dans l'autre, ce qui a pour effet de fixer l'attache (3) sur la zone d'extrémité (21, 22) de l'étrier de collier de serrage (2), et ainsi sur le côté opposé de la partie médiane de l'étrier de collier de serrage (2) se trouvant relativement entre les orifices (23),
- lorsqu'elle s'engage dans au moins un orifice (41) du support (4) pour fixer l'étrier de collier de serrage (2) sur le support (4), l'attache (3) n'englobe pas le support (4), et
- lorsque l'attache est montée sur les zones d'extrémité (21, 22) de l'étrier de collier de serrage (2), la languette (34) de l'attache (3), est placée à la parallèle des zones d'extrémité (21, 22) de l'étrier de collier de serrage (2).

10. Collier de serrage (1) pour tuyau selon la revendication 9, **caractérisé en ce que** l'élément de fixation A (24) constitue une protubérance dans les zones d'extrémité (21, 22) et l'élément de fixation B (31) constitue un orifice ou un renfoncement, l'élément de fixation A (24) étant conçu de telle sorte que le point culminant (24a) de la protubérance comporte en direction
i) de l'extrémité de la zone d'extrémité (21a, 22a) une pente négative de 5° à 50°, notamment de 10° à 40°, et/ou
ii) du centre de l'étrier de collier de serrage (2) une pente négative de 55° à 90°, notamment de 70° à 90°.

11. Collier de serrage (1) pour tuyau selon la revendication 9 ou 10, **caractérisé en ce qu'**au moins une extrémité de la zone d'extrémité (21a, 22a) de l'étrier de collier de serrage (2) comporte une fermeture (25) flexible et/ou rotative et au moins une attache (3) comporte au centre de la zone de maintien (32) de l'attache (3) un orifice (33) supplémentaire, à travers lequel mène la fermeture (25) lors de la fixation de l'attache (3) sur le support (4).

12. Collier de serrage (1) pour tuyau selon au moins l'une quelconque des revendications 9 à 11, **caractérisé en ce qu'**au moins une extrémité de la zone d'extrémité (21a, 22a) de l'étrier de collier de serrage (2) comporte deux éléments de guidage (26) latéraux, lesquelles guident latéralement au moins une partie l'attache (3).

13. Procédé, destiné à poser des tuyaux (7) à l'aide du collier de serrage (1) pour tuyau selon au moins l'une quelconque des revendications 1 à 12, **caractérisé en ce que**
i) l'on fixe les supports (4) par fermeture rotative (6) sur la plaque d'embase (5),
ii) l'on pousse les attaches (3) dans les zones d'extrémité (21, 22) d'un premier étrier de collier de serrage (2), ce qui a pour effet de maintenir les attaches (3) sur l'étrier de collier de serrage (2),
iii) l'on guide les supports (4) à travers les orifices (23) du premier étrier de collier de serrage (2) et l'on fixe l'étrier de collier de serrage (2) à l'aide des attaches (3) à l'endroit voulu sur les supports (4),
iv) l'on pose un tuyau (7) sur l'étrier de collier de serrage (2), et
v) l'on réitère éventuellement les étapes ii) et iii) avec un deuxième étrier de collier de serrage (2), ce qui a pour effet de maintenir le tuyau (7) en haut et en bas avec chaque fois un étrier de collier de serrage (2).

14. Procédé selon la revendication 13, **caractérisé en ce que** la fermeture rotative (6) comprend un œillet avec collerette (51, 44), ainsi qu'un orifice (43, 52) et/ou une zone de guidage (53) arrondie de la plaque d'embase (5), de préférence, la fermeture rotative (6)
i) étant réalisée par un œillet avec collerette (51, 44) et un orifice (43, 52), lors duquel l'on pose l'orifice (43, 52) autour de l'œillet (51, 44), suite à quoi le support (4) peut se tourner avec le pied (42) autour de la plaque d'embase (5), ou
ii) l'on guide le segment arrondi du pied (42) du support (4) dans la zone de guidage (53) de la plaque d'embase (5), notamment par mouvement rotatif, ou
iii) l'on pose l'orifice (43, 52) autour de l'œillet (51, 44), de telle sorte que l'au moins un segment arrondi du pied (42) et l'au moins une zone de guidage (53) arrondie de la plaque d'embase (5) forment sensiblement un cercle ou une ou plusieurs parties de celuici, le pied (42) du support (4) étant ensuite tourné autour de l'orifice (52), respectivement de l'œillet (51) de la plaque d'embase (5), suite à quoi, le segment arrondi du pied (42) s'engage dans la zone de guidage (53) et est maintenu de ce fait.

15. Utilisation du collier de serrage (1) pour tuyau selon au moins l'une quelconque des revendications 1 à 12 pour fixer des tuyaux (7), comme des conduites d'eau, des conduites d'aération, des gaines de câble ou des câbles et/ou des lignes, comme des lignes électriques, des lignes téléphoniques et/ou des lignes de télédistribution.
